# EUROPÄISCHE PATENTSCHRIFT

(11) **EP 2 039 952 B1**
(45) Veröffentlichungstag und Bekanntmachung des Hinweises auf die Patenterteilung: **24.10.2012**
(21) Anmeldenummer: 08015173.1
(22) Anmeldetag: 28.08.2008
(51) Int. Cl.: F16D 13/70, F16D 21/06

(54) **Kupplungsanordnung**
Coupling assembly
Agencement de couplage

(30) Priorität: 24.09.2007 DE 102007045587
(43) Veröffentlichungstag der Anmeldung: 25.03.2009
(73) Patentinhaber: Schaeffler Technologies AG & Co. KG, 91074 Herzogenaurach (DE)
(72) Erfinder: Vlasakov, Stanislav, 77815 Bühl/Vimbuch (DE)

(56) Entgegenhaltungen:
- EP-A1- 1 862 685
- EP-A1- 1 862 689
- EP-A2- 1 748 206
- DE-A1- 10 149 700
- DE-A1-102004 034 391
- DE-B- 1 216 034
- DE-C- 734 932
- US-A- 5 404 979

## Beschreibung

Die vorliegende Erfindung betrifft eine Kupplungsanordnung, ein Schwungrad sowie einen Mitnehmerring gemäß dem Oberbegriff der unabhängigen Ansprüche.

Bei der Montage eines Getriebes eines Kraftfahrzeuges mit einem Verbrennungsmotor zum Antrieb eines Kraftfahrzeuges ist in der Regel ein Schwungrad bereits fest an der Kurbelwelle des Verbrennungsmotors montiert, die Kupplung ist bereits fest mit der Getriebeeingangswelle bzw. bei einem Doppelkupplungsgetriebe mit den Getriebeeingangswellen montiert. Der axiale Abstand zwischen den Montageflächen der Kupplungsbaugruppe und des Schwungrades wird durch die Geometrie der Kupplungsglocke und weiterer Gehäuseteile von Getriebe und Verbrennungsmotor bestimmt. Ein Ausgleich von axialen Toleranzen findet nicht statt, es findet hier also gegebenenfalls eine Montage von Kupplungsbaugruppe und Schwungrad unter Spannung statt.

Eine Kupplungsanordnung, ein Schwungrad sowie ein Mitnehmerring gemäß dem Oberbegriff der unabhängigen Ansprüche ist aus der DE 101 49 700 A1 bekannt.

Eine Aufgabe der vorliegenden Erfindung ist es, eine Kupplungsanordnung, ein Schwungrad sowie einen Mitnehmerring anzugeben, durch die bei der Montage ein axialer Toleranzausgleich ermöglicht werden kann.

Erfindungsgemäß gelöst wird diese Aufgabe durch eine Kupplungsanordnung gemäß Patentanspruch 1.

Die Kupplungsanordnung umfasst ein Schwungrad, eine mit dem Schwungrad fest verbundene Kupplungsbaugruppe und ein Mittel, das die Verbindung der Kupplungsbaugruppe mit dem Schwungrad bei unterschiedlichen axialen Abständen zwischen Kupplungsbaugruppe und Schwungrad während der Montage von Kupplungsbaugruppe und Schwungrad ermöglicht. Mit den unterschiedlichen axialen Abständen ist gemeint, dass eine Montage von Schwungrad und Kupplungsbaugruppe bei unterschiedlichen axialen Abständen zwischen zwei dem Grunde nach willkürlich wählbaren radial verlaufenden Bezugsflächen beider Baugruppen möglich ist. Unter axial wird hier die Richtung axial zur Kurbelwelle bzw. Getriebeeingangswelle verstanden, unter radial entsprechend senkrecht dazu.

Darüberhinaus ist vorgesehen, dass die Kupplungsbaugruppe mit dem Schwungrad an mindestens einer Verbindungsstelle mit einer Schraube verbunden ist und das Mittel mehrere über den Umfang der Kupplungsbaugruppe und/oder des Schwungrades verteilte Bohrungen zur Aufnahme der Schrauben umfasst, wobei jeder der Bohrungen eine Anlagefläche zugeordnet ist und die Anlageflächen unterschiedliche axiale Abstände zu einer Bezugsfläche aufweisen. Zu einer Verbindungsstelle gehören also mehrere Bohrungen, wobei die Auswahl der Bohrungen den axialen Toleranzausgleich bewirkt. Die Bezugsfläche kann im Prinzip beliebig gewählt werden und die nur der Definition unterschiedliche axiale Abstände der verschiedenen Bohrungen zu besagter Bezugsfläche. Dies ermöglicht einen einfachen Toleranzausgleich mit verschiedenen Stufen, also kein kontinuierlichen Toleranzausgleich.

Vorzugsweise ist dabei vorgesehen, dass die Kupplungsbaugruppe mit dem Schwungrad an mehreren Verbindungsstellen, die jeweils eine Schraube umfassen, verbunden ist und jeder der Verbindungsstellen mehrere über den Umfang verteilte Bohrungen zugeordnet sind. Die den Bohrungen zugeordneten Anlageflächen liegen vorzugsweise unmittelbar nebeneinander. Dies ermöglicht eine vergleichsweise Platz sparende Anordnung über den Umfang der Kupplungsbaugruppe bzw. des Schwungrades. Die den Bohrungen zugeordneten Anlageflächen sind vorzugsweise in axialer Richtung rampenartig nebeneinander angeordnet. Unter rampenartig werden hier auch treppenstufenartig nebeneinander angeordnete Anlageflächen verstanden.

Vorzugsweise ist vorgesehen, dass die mehreren Bohrungen je Verbindungsstelle in der Schwungscheibe angeordnet sind, die über einen Mitnehmerring je Verbindungsstelle einer Gewindebohrung mit der Kupplung verbunden sind. Diese Anordnung lässt sich auch geometrisch umkehren, dass also mehrere Gewindebohrungen je Verbindungsstelle in dem Mitnehmerring angeordnet sind und jeweils eine Bohrung je Verbindungsstelle in der Schwungscheibe angeordnet ist.

Die Kupplungsbaugruppe umfasst vorzugsweise eine Doppelkupplung. Die erfindungsgemäße Kupplungsanordnung lässt sich selbstverständlich sowohl bei einer Doppelkupplung als auch bei einer Einfachkupplung anwenden.

Die eingangs genannte Aufgabe wird ferner durch ein Schwungrad gemäß Patentanspruch 7 und einen Mitnehmerring gemäß Patentanspruch 8 gelöst.

Im Folgenden werden Ausführungsbeispiele der Erfindung anhand der beiliegenden Zeichnungen erläutert. Dabei zeigen:
- Fig. 1: eine Aufsicht auf ein Ausführungsbeispiel einer erfindungsgemäßen Kupplungsanordnung;
- Fig. 2: den Schnitt A-A in Fig. 1;
- Fig. 3: den Schnitt B-B in Fig. 1;
- Fig. 4: ein nicht erfindungsgemäße Kupplungsanordnung.

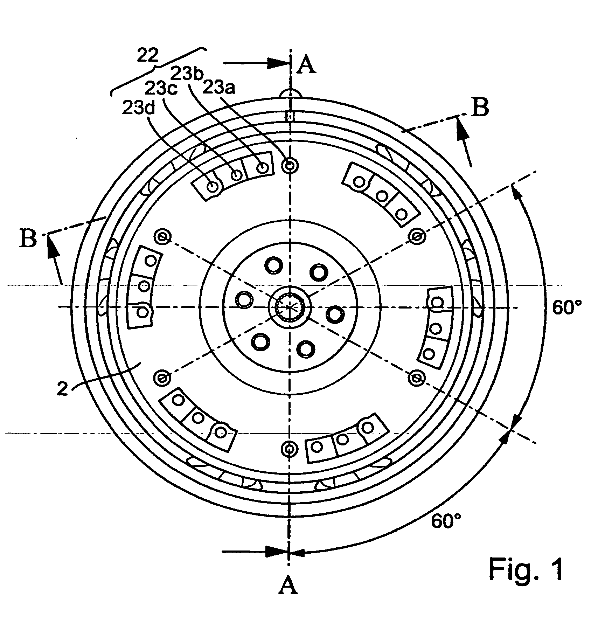

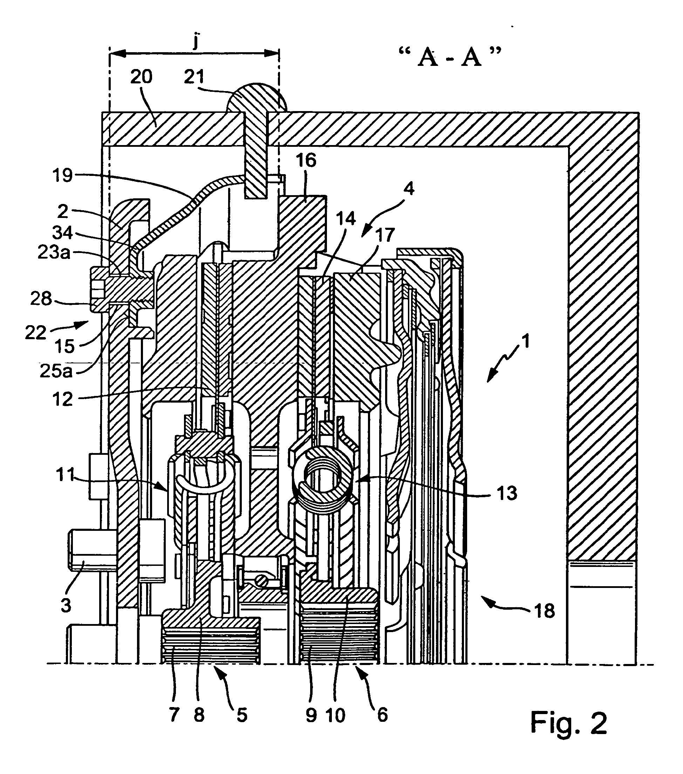

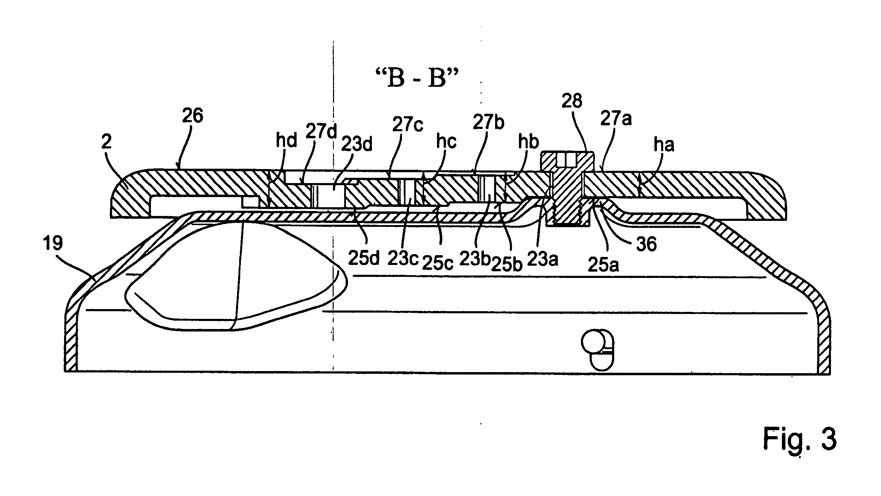

Fig. 1 zeigt eine Aufsicht auf ein Ausführungsbeispiel einer erfindungsgemäßen Kupplungsanordnung 1. Fig. 2 zeigt einen Schnitt A-A gemäß Fig. 1 und Fig. 3 zeigt einen Schnitt B-B in Fig. 1. Anhand der Figuren 1 bis 3 wird ein erstes Ausführungsbeispiel einer erfindungsgemäßen Kupplungsanordnung 1 beschrieben. Die Kupplungsanordnung 1 umfasst ein Schwungrad 2, das mit Schrauben 3 in einem hier nicht dargestellten Flansch einer Kurbelwelle einer Brennkraftmaschine verbunden ist. In Einbaulage ist das Schwungrad 2 also in axialer Richtung fest und drehfest mit der Kurbelwelle verbunden. Die Kupplungsanordnung 1 umfasst des Weiteren eine Kupplungsbaugruppe 4, die antriebsseitig drehfest mit dem Schwungrad 2 und damit der Kurbelwelle abtriebsseitig drehfest mit zwei koaxial gelagerten und hier nicht dargestellten Getriebeeingangswellen verbunden ist. Bei der Kupplungsbaugruppe 4 handelt es sich um eine sog. Doppelkupplung, die zwei von einander unterabhängig zu betätigende Kupplungen umfasst, nämlich eine erste Kupplung 5 und eine zweite Kupplung 6. Die erste Kupplung 5 ist abtriebsseitig mit einer Verzahnung 7 eines ersten Abtriebsflansches 8 mit einer hier nicht dargestellten ersten Getriebeeingangswelle verbunden, die zweite Kupplung 6 ist abtriebsseitig mit einer Verzahnung 9 eines zweiten Abtriebsflansches 10 mit einer hier nicht dargestellten zweiten Getriebeeingangswelle verbunden. Der erste Abtriebsflansch 8 ist über ein hier nur schematisch dargestellten Torsionsdämpfer 11 mit einer ersten Kupplungsscheibe 12 verbunden, der zweite Abtriebsflansch 10 ist über einen zweiten Torsionsdämpfer 13 mit einer zweiten Kupplungsscheibe 14 verbunden. Die erste Kupplungsscheibe 12 kann mittels einer ersten Druckplatte 15 reibschlüssig mit einer Gegendruckplatte 16 gekuppelt werden, die zweite Kupplungsscheibe 14 kann entsprechend über eine zweite Druckplatte 17 mit der Gegendruckplatte 16 reibschlüssig verbunden werden. Der gesamte Betätigungsmechanismus der Doppelkupplung, dieser ist hier mit dem Bezugszeichen 18 bezeichnet, werden hier nicht näher dargestellt und ist an sich bekannt. Die Gegendruckplatte 16 ist über einen Mitnehmerring 19 kraftschlüssig zur Übertragung eines Drehmomentes mit dem Schwungrad 2 verbunden. Eine Kupplungsglocke 20 ist über Halteelemente 21 ebenfalls drehfest über den Mitnehmerring 19 mit dem Schwungrad 2 verbunden.

Das Schwungrad 2 ist mit dem Mitnehmerring 19 an mehreren Verbindungsstellen 22 verschraubt. Im vorliegenden Ausführungsbeispiel ist das Schwungrad 2 mit dem Mitnehmerring 19 an sechs Verbindungsstellen miteinander verschraubt, diese sechs Verbindungsstellen 22 sind also in einem Winkel von jeweils 60° zueinander angeordnet. Zu jeder Verbindungsstelle 22 gehören im vorliegenden Ausführungsbeispiel jeweils vier Bohrungen 23a, 23b, 23c und 23d, die nebeneinander liegend in das Schwungrad 2 eingebracht sind. Die Bohrungen 23a sind wie zuvor dargestellt in einem festgelegten Raster über den Umfang des Schwungrades 2 verteilt. Die Bohrungen 23b sind ebenfalls jeweils in diesem Raster über den Umfang des Schwungrades 2 verteilt, ebenso sind die Bohrungen 23c und 23d jeweils in diesem Raster über den Umfang des Schwungrades 2 verteilt. In dem Mitnehmerring 19 sind sechs Gewindebohrungen 24 ebenfalls in dem 60°-Raster eingebracht. Die Bohrungen 23 lassen sich also sowohl jeweils mit den Bohrungen 23a oder jeweils den Bohrungen 23b oder jeweils den Bohrungen 23c oder jeweils den Bohrungen 23d deckungsgleich bringen. Zu den Bohrungen 23a bis 23d gehören jeweils den Bohrungen zugeordnete Anlageflächen 25a bis 25d, der Bohrung 23a ist also die Anlagefläche 25a zugeordnet, der Bohrung 23b ist die Anlagefläche 25b zugeordnet, der Bohrung 23c ist jeweils die Anlagefläche 25c zugeordnet und der Bohrung 23d ist jeweils die Anlagefläche 25d zugeordnet. In Fig. 1 ist die Bezeichnung der Bohrung 23a bis 23d unter der Anlageflächen 25a bis 25d nur anhand einer Verbindungsstelle 22 dargestellt. Statt sechs Verbindungsstellen 22, die in jeweils einem 60°-Winkel angeordnet sind, kann hier auch eine beliebige Anzahl an Verbindungsstellen, beispielsweise vier, fünf, sieben, acht usw. Verbindungsstellen vorgesehen sein. Die Verbindungsstellen müssen nicht in einem äquidistanten Winkelraster, in dem hier dargestellten Ausführungsbeispiel jeweils 60°, angeordnet sein, hier können auch unterschiedliche Winkel zwischen den jeweiligen Verbindungsstellen vorgesehen sein.

Durch eine Relativverdrehung des Mitnehmerrings 19 können die jeweiligen Gewindebohrungen 24 des Mitnehmerringes 19 also entweder alle jeweils mit den Bohrungen 23a, oder alle jeweils mit den Bohrungen 23b oder alle jeweils mit den Bohrungen 23c oder alle jeweils mit den Bohrungen 23d verbunden werden. Die Anlageflächen 25a bis 25d haben gegenüber einer Bezugsfläche 26 unterschiedliche Höhen ha bis hd. Der Index der Höhe h entspricht jeweils dem Index der Bohrung 23 bzw. der Anlagefläche 25, die Höhe hb gehört also zur Bohrung 23b und der Anlagefläche 25b. Die Bezugsfläche 26 kann willkürlich gewählt werden, beispielsweise könnte als Bezugsfläche 26 auch die Anlagefläche 25a der Bohrung 23a gewählt werden. Die Anlageflächen 25a bis 25d haben wie aus dem Schnitt der Fig. 3 zu erkennen ist, somit unterschiedliche axiale Höhen, sodass durch Wahl der jeweiligen Bohrung 23a bis 23d bei der Verschraubung von Mitnehmerring 19 und Schwungrad 2 unterschiedliche Abstände J zwischen zwei beliebigen radialen Bezugsflächen der Kupplungsbaugruppe 4 und des Schwungrades 2 bewegt werden können. Die unterschiedliche Bohrungsdurchmesser der Bohrung 23b, 23c und 23d in Fig. 3 sind auf den gewählten Schnitt zurückzuführen, der ein grader Schnitt b-b in Fig. 1 ist und nicht dem Radius, auf dem die Bohrungen angeordnet sind, folgt. Die Schraubenkopfsitze 27a bis 27d sind, wie aus der Darstellung der Fig. 3 zu erkennen ist, jeweils so weit in die Bezugsfläche 26 des Schwungrades 2 eingebracht, zum Beispiel gesenkt, dass der Abstand zwischen dem jeweiligen Schraubenkopfsitz 27 und der Anlagefläche 25 konstant ist, sodass Schrauben 28, die zur Verbindung des Mitnehmerringes 19 mit dem Schwungrad 2 durch die Bohrungen 23 jeweils in die Gewindebohrungen 24 eingeschraubt werden, in der Gewindebohrung 24 um die gleiche Gewindetiefe eingeschraubt werden können. Die Bohrung 23a bis 23d und die zugehörigen Anlageflächen 25a bis 25d sind also rampenartig nebeneinander angeordnet. Im Bereich der Gewindebohrungen 24 des Mitnehmerringes 19 sind jeweils Sicken 36 eingepresst, die eine derartige Höhe haben, dass der Abstand zwischen der Oberfläche der Sicken 36 und den jeweiligen Anlageflächen 25 überwunden werden kann, dass also eine reibschlüssige Verbindung jeweils zwischen der Oberfläche der Sicke 36 und der jeweils zugeordneten Anlagefläche 25 bei der Verschraubung entsteht.

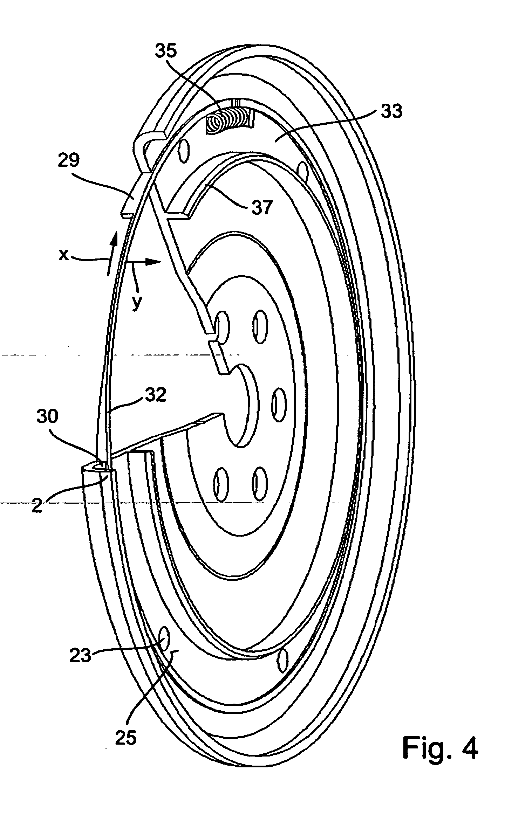

Fig. 4 zeigt eine nicht erfindungsgemäße Kupplungsanordnung. Statt einer rampenartigen Anordnung nebeneinander liegender Bohrungen des Schwungrades 2 ist hier ein Verstellring 29 in einer Ringnut 30 des Schwungrades 2 angeordnet. Der Verstellring 29 umfasst eine oder mehrere Rampen 31, die sich an entsprechenden Gegenrampen an dem Nutboden der Ringnut 30 abstützen. Bei einer Verdrehung des Verstellringes 29 relativ zum Schwungrad 2 in Richtung des Pfeils x in Fig. 4 findet also eine axiale Bewegung einer Anlagefläche 32 des Verstellringes 29 in Richtung des Pfeils y statt. In der einen Position des Schwungrades 2 gegenüber der Kupplungsbaugruppe 4 wird also ein Spalt zwischen einer Montagefläche 33 des Schwungrades 2 und einer Montagefläche 34 des Mitnehmerringes 19, diese ist in Fig. 2 mit einem Bezugszeichen versehen, geschlossen. Die Montagefläche 34 stützt sich nach der Montage von Mitnehmerring 19 und Schwungrad 2 demzufolge nicht an der Montagefläche 33 des Schwungrades 2 ab, sondern an der Anlagefläche 32 des Verstellringes 29. Der Verstellring 29 wird durch eine Feder 35 oder gegebenenfalls durch mehrere Federn 35 in Richtung des Pfeils x relativ zum Schwungrad 2 gedrückt. Eine herausziehbare Montagesicherung, beispielsweise in Form einer Klammer oder dergleichen, sorgt dafür, dass die Feder 35 erst zu einem während der Montage gewünschten Zeitpunkt in Funktion tritt, das Herausziehen der Klammer oder dergleichen setzt also die Feder frei, sodass diese die zuvor beschriebene Drehbewegung des Verstellringes bewirken kann.

Um eine reibschlüssige Verbindung zwischen Anlageflächen 25 der Bohrungen 23 des Schwungrades 2 mit den Anlageflächen 34 des Mitnehmerringes 19 zu gewährleisten, sind in Fig. 4 Sicken 36 im Bereich der Gewindebohrungen 24 des Mitnehmerringes 19 angeordnet. Die Sicken sind dabei so bemessen, dass diese sich nur zwischen einem Innenring 37 und dem Verstellring 29 in radialer Richtung erstrecken.

Die Höhendifferenz aller Rampen, sprich die Höhendifferenz der Höhen ha bis hd im Ausführungsbeispiel der Fig. 3 und die Höhe der Rampe 31 mit der zugehörigen Gegenrampein in Fig. 4, ist von der Ausgleichsgenauigkeit, von der auszugleichenden Toleranz und von der Anzahl der Rampen abhängig. Im Ausführungsbeispiel der Fig. 1 bis 3 kann die Abstufung der Höhen der jeweiligen Anlageflächen 25 beispielsweise 1 mm betragen, die Sprünge der Höhen ha bis hd sind also jeweils beispielsweise 1 mm und insgesamt 3 mm.

Vor der Montage des Getriebes eines Kraftfahrzeuges und des zugehörigen Verbrennungsmotors müssen das Schwungrad und Kupplungsbaugruppe in einer bestimmten Winkellage positioniert sein. Während dieser Montage ist das Schwungrad 2 bereits fest mit der Kurbelwelle des Verbrennungsmotors verbunden, die Kupplungsbaugruppe 4 ist bereits fest mit dem Getriebe verbunden. Die Kupplungsbaugruppe 4 und damit der Mitnehmerring 19 werden beim Ausführungsbeispiel der Fig. 1 bis 3 nun so weit verdreht, bis das Spiel zwischen Mitnehmerring 19 und Schwungrad 2 möglichst weit, im besten Fall ganz, überwunden ist. In Fig. 4 werden die Bohrungen 23 mit den Gewindebohrungen 24 deckungsgleich gebracht und Schrauben leicht angedreht, sodann wird die Sperre der Feder 35 gelöst, sodass sich der Verstellring 29 dreht und das Spiel zwischen Schwungrad 2 und Mitnehmerring 19 überwindet. In Fig. 4 soll die Anzahl der Schrauben zur Verbindung des Schwungrades 2 mit dem Mitnehmerring 19 der Anzahl der verwendeten Rampen 31 entsprechen.

Die Ausführungsbeispiele der Fig. 1 bis 3 können jeweils geometrisch umgekehrt werden, die rampenartig angeordneten Bohrungen im Ausführungsbeispiel der Fig. 1 bis 3 können auch statt in dem Schwungrad 2 in dem Mitnehmerring 19 angeordnet werden, entsprechend kann auch der Verstellring 29 statt in dem Schwungrad 2 in dem Mitnehmerring 19 angeordnet sein. Die geometrische Umkehr im Falle des Ausführungsbeispieles der Fig. 1 bis 3 bedeutet also, dass mehrere Gewindebohrungen 24 in dem Mitnehmerring 19 nebeneinander angeordnet sind und entsprechend rampenartig nebeneinander angeordnete Anlageflächen aufweisen, in dem Schwungrad 2 ist in diesem Fall nur jeweils eine Bohrung 23 pro Verbindungsstelle 22 angeordnet, wobei die Bohrung 23 auf der dem Mitnehmerring 19 zugewandten Seite eine axial vorstehende Anlagefläche ähnlich einer Sicke aufweist.

## Patentansprüche

1. Kupplungsanordnung (1) umfassend ein Schwungrad (2), eine mit dem Schwungrad (2) fest verbundene Kupplungsbaugruppe (4) und ein Mittel, das die Verbindung der Kupplungsbaugruppe (4) mit dem Schwungrad (2) bei unterschiedlichen axialen Abständen zwischen Kupplungsbaugruppe (4) und Schwungrad (2) während der Montage von Kupplungsbaugruppe (4) und Schwungrad (2) ermöglicht, wobei die Kupplungsbaugruppe (4) mit dem Schwungrad (2) an mindestens einer Verbindungsstelle (22) mit einer Schraube (28) verbunden ist, **dadurch gekennzeichnet, dass** das Mittel mehrere über den Umfang der Kupplungsbaugruppe (4) und/oder des Schwungrades (2) verteilte Bohrungen (23) zur Aufnahme der Schrauben (28) umfasst, wobei jeder der Bohrungen (23) eine Anlagefläche (25) zugeordnet ist und die Anlageflächen (25) unterschiedliche axiale Abstände (ha, hb, hc, hd) zu einer Bezugsfläche (26) aufweisen.

2. Kupplungsanordnung nach Anspruch 1, **dadurch gekennzeichnet, dass** die Kupplungsbaugruppe (4) mit dem Schwungrad (2) an mehreren Verbindungsstellen (22), die jeweils eine Schraube (28) umfassen, verbunden ist und jeder der Verbindungsstellen (22) mehrere über den Umfang verteilte Bohrungen (23a, 23b, 23c, 23d) zugeordnet sind.

3. Kupplungsanordnung nach Anspruch 1, **dadurch gekennzeichnet, dass** die den Bohrungen (23a, 23b, 23c, 23d) zugeordneten Anlageflächen (25a, 25b, 25c, 25d) unmittelbar nebeneinander liegen.

4. Kupplungsanordnung nach Anspruch 3, **dadurch gekennzeichnet, dass** die den Bohrungen (23a, 23b, 23c, 23d) zugeordneten Anlageflächen (25a, 25b, 25c, 25d) in axialer Richtung rampenartig nebeneinander angeordnet sind.

5. Kupplungsanordnung nach einem der Ansprüche 1 bis 4, **dadurch gekennzeichnet, dass** die mehreren Bohrungen (25a, 25b, 25c, 25d) je Verbindungsstelle (22) in dem Schwungrad angeordnet sind, die über einen Mitnehmerring mit je Verbindungsstelle (22) einer Gewindebohrung (24) mit der Kupplungsbaugruppe (4) verbunden ist.

6. Kupplungsanordnung nach einem der Ansprüche 1 bis 5, **dadurch gekennzeichnet, dass** die Kupplungsbaugruppe (4) eine Doppelkupplung umfasst.

7. Schwungrad (2) zur Verbindung mit einem Mitnehmerring (19), mit Bohrungen (23a, 23b, 23c, 23d), denen jeweils eine mitnehmerringseitige Anlagefläche (25a, 25b, 25c, 25d) zugeordnet ist, zur Aufnahme von Schrauben (28), die in einem Verbindungsraster angeordnet sind, **dadurch gekennzeichnet, dass** die Bohrungen (23a, 23b, 23c, 23d) so angeordnet sind, dass die einem Verbindungsraster zugeordneten mitnehmerringseitigen Anlageflächen (25a, 25b, 25c, 25d) der jeweiligen Bohrungen unterschiedliche axiale Höhen (ha, hb, hc, hd) gegenüber einer Bezugsfläche (26) aufweisen.

8. Mitnehmerring (19) zur Verbindung mit einem Schwungrad (2), mit Bohrungen (23a,23b, 23c, 23d), denen jeweils eine schwungradseitige Anlagefläche (25a, 25b, 25c, 25d) zugeordnet ist, zur Aufnahme von Schrauben (28), die in einem Verbindungsraster angeordnet sind, **dadurch gekennzeichnet, dass** die Bohrungen (23a, 23b, 23c, 23d) so angeordnet sind, dass die einem Verbindungsraster zugeordneten schwungradseitigen Anlageflächen (25a, 25b, 25c, 25d) der jeweiligen Bohrungen (23a, 23b, 23c, 23d) unterschiedliche axiale Höhen (ha, hb, hc, hd) gegenüber einer Bezugsfläche aufweisen.

## Claims

1. Coupling assembly (1), comprising a flywheel (2), a coupling subassembly (4) firmly connected to the flywheel (2), and a means which enables the coupling subassembly (4) to be connected to the flywheel (2) in the event of different axial distances between the coupling subassembly (4) and flywheel (2) during the mounting of the coupling subassembly (4) and flywheel (2), the coupling subassembly (4) being connected to the flywheel (2) at at least one connection point (22) by means of a screw (28), **characterized in that** the means comprises a plurality of bores (23) distributed over the circumference of the coupling subassembly (4) and/or of the flywheel (2) and intended for receiving the screws (28), each of the bores (23) being assigned a bearing surface (25), and the bearing surfaces (25) having different axial distances (ha, hb, hc, hd) from a reference surface (26).

2. Coupling assembly according to Claim 1, **characterized in that** the coupling subassembly (4) is connected to the flywheel (2) at a plurality of connection points (22) which each comprise a screw (28), and each of the connection points (22) is assigned a plurality of bores (23a, 23b, 23c, 23d) distributed over the circumference.

3. Coupling assembly according to Claim 1, **characterized in that** the bearing surfaces (25a, 25b, 25c, 25d) assigned to the bores (23a, 23b, 23c, 23d) lie directly next to one another.

4. Coupling assembly according to Claim 3, **characterized in that** the bearing surfaces (25a, 25b, 25c, 25d) assigned to the bores (23a, 23b, 23c, 23d) are arranged next to one another in a ramp-like manner in the axial direction.

5. Coupling assembly according to one of Claims 1 to 4, **characterized in that** the plurality of bores (25a, 25b, 25c, 25d) for each connection point (22) are arranged in the flywheel which is connected to the coupling subassembly (4) via a driving ring, in each case with a connection point (22) of a threaded bore (24).

6. Coupling assembly according to one of Claims 1 to 5, **characterized in that** the coupling subassembly (4) comprises a double clutch.

7. Flywheel (2) for connection to a driving ring (19), with bores (23a, 23b, 23c, 23d), to each of which is assigned a driving-ring-side bearing surface (25a, 25b, 25c, 25d), for reception of screws (28) which are arranged in a connection grid, **characterized in that** the bores (23a, 23b, 23c, 23d) are arranged such that the driving-ring-side bearing surfaces (25a, 25b, 25c, 25d), assigned to a connection grid, of the respective bores have different axial heights (ha, hb, hc, hd) with respect to a reference surface (26).

8. Driving ring (19) for connection to a flywheel (2), with bores (23a, 23b, 23c, 23d), to which a flywheel-side bearing surface (25a, 25b, 25c, 25d) is assigned in each case, for the reception of screws (28) which are arranged in a connection grid, **characterized in that** the bores (23a, 23b, 23c, 23d) are arranged such that the flywheel-side bearing surfaces (25a, 25b, 25c, 25d), assigned to a connection grid, of the respective bores (23a, 23b, 23c, 23d) have different axial heights (ha, hb, hc, hd) with respect to a reference surface.

## Revendications

1. Agencement d'embrayage (1) comprenant un volant d'inertie (2), un module d'embrayage (4) connecté fixement au volant d'inertie (2) et un moyen qui permet l'assemblage du module d'embrayage (4) au volant d'inertie (2) en cas d'espacements axiaux différents entre le module d'embrayage (4) et le volant d'inertie (2) pendant le montage du module d'embrayage (4) et du volant d'inertie (2), le module d'embrayage (4) étant assemblé au volant d'inertie (2) en au moins un point d'assemblage (22) avec une vis (28), **caractérisé en ce que** le moyen comprend plusieurs alésages (23) répartis sur la périphérie du module d'embrayage (4) et/ou du volant d'inertie (2) pour recevoir les vis (28), chacun des alésages (23) étant associé à une surface d'appui (25) et les surfaces d'appui (25) présentant des espacements axiaux différents (ha, hb, hc, hd) à une surface de référence (26).

2. Agencement d'embrayage selon la revendication 1, **caractérisé en ce que** le module d'embrayage (4) est assemblé au volant d'inertie (2) en plusieurs points d'assemblage (22) qui comprennent à chaque fois une vis (28), et chacun des points d'assemblage (22) est associé à plusieurs alésages (23a, 23b, 23c, 23d) répartis sur la périphérie.

3. Agencement d'embrayage selon la revendication 1, **caractérisé en ce que** les surfaces d'appui (25a, 25b, 25c, 25d) associées aux alésages (23a, 23b, 23c, 23d) sont situées immédiatement les unes à côté des autres.

4. Agencement d'embrayage selon la revendication 3, **caractérisé en ce que** les surfaces d'appui (25a, 25b, 25c, 25d) associées aux alésages (23a, 23b, 23c, 23d) sont disposées les unes à côté des autres en forme de rampe dans la direction axiale.

5. Agencement d'embrayage selon l'une quelconque des revendications 1 à 4, **caractérisé en ce que** les multiples alésages (23a, 23b, 23c, 23d) pour chaque point d'assemblage (22) sont disposés dans le volant d'inertie, qui est assemblé au module d'embrayage (4) par le biais d'une bague d'entraînement avec un alésage fileté (24) pour chaque point d'assemblage (22).

6. Agencement d'embrayage selon l'une quelconque des revendications 1 à 5, **caractérisé en ce que** le module d'embrayage (4) comprend un double embrayage.

7. Volant d'inertie (2) pour l'assemblage à une bague d'entraînement (19), avec des alésages (23a, 23b, 23c, 23d) auxquels est à chaque fois associée une surface d'appui (25a, 25b, 25c, 25d) du côté de la bague d'entraînement, pour recevoir des vis (28) qui sont disposées dans une trame d'assemblage, **caractérisé en ce que** les alésages (23a, 23b, 23c, 23d) sont disposés de telle sorte que les surfaces d'appui (25a, 25b, 25c, 25d) des alésages respectifs du côté de la bague d'entraînement, associées à une trame d'assemblage, présentent des hauteurs axiales différentes (ha, hb, hc, hd) par rapport à une surface de référence (26).

8. Bague d'entraînement (19) pour l'assemblage à un volant d'inertie (2), avec des alésages (23a, 23b, 23c, 23d), auxquels est à chaque fois associée une surface d'appui (25a, 25b, 25c, 25d) du côté du volant d'inertie, pour recevoir des vis (28) qui sont disposées dans une trame d'assemblage, **caractérisé en ce que** les alésages (23a, 23b, 23c, 23d) sont disposés de telle sorte que les surfaces d'appui (25a, 25b, 25c, 25d) des alésages respectifs (23a, 23b, 23c, 23d) du côté du volant d'inertie associées à une trame d'assemblage, présentent des hauteurs axiales différentes (ha, hb, hc, hd) par rapport à une surface de référence.
